# EUROPÄISCHE PATENTANMELDUNG

(11) **EP 4 137 461 A1**
(43) Veröffentlichungstag der Anmeldung: **22.02.2023**
(21) Anmeldenummer: 22180748.0
(22) Anmeldetag: 23.06.2022
(51) Int. Cl.: C02F 1/32

(54) **VORRICHTUNG ZUR FLÜSSIGKEITSDESINFEKTION**

(30) Priorität: 19.08.2021 AT 506712021
(71) Anmelder: Uvaudes GmbH, 4861 Schörfling am Attersee (AT)
(72) Erfinder: Schmid, Kurt, 4912 Neuhofen im Innkreis (AT); Stadler, Friedrich, 4853 Steinbach am Attersee (AT)
(74) Vertreter: Hübscher & Partner Patentanwälte GmbH

(57) **Zusammenfassung**

Es wird eine Vorrichtung zur Flüssigkeitsdesinfektion mit einem an den Enden einen Einlass (6) und einen Auslass (7) für die zu behandelnde Flüssigkeit aufweisenden, zylindrischen Gehäuse (1) beschrieben, in dem in einem Kranz um die Zylinderachse UV-Strahler in in Längsrichtung des zylindrischen Gehäuses (1) verlaufenden Hüllrohren (2) angeordnet sind, wobei der auf einer Stirnseite des Gehäuses (1) vorgesehene Einlass (6) eine Leiteinrichtung mit einem der in das Gehäuse (1) einströmenden Flüssigkeit einen Drall erteilenden Leitschaufelkranz (10) aufweist. Um vorteilhafte Bestrahlungsbedingungen zu schaffen, wird vorgeschlagen, dass die Leiteinrichtung wenigstens zwei koaxiale Rohre, nämlich ein inneres Leitrohr (8) für eine axiale Flüssigkeitsströmung und ein äußeres Mantelrohr (9) mit dem Leitschaufelkranz (10) umfasst.

## Beschreibung

Die Erfindung bezieht sich auf eine Vorrichtung zur Flüssigkeitsdesinfektion mit einem an den Enden einen Einlass und einen Auslass für die zu behandelnde Flüssigkeit aufweisenden, zylindrischen Gehäuse, in dem in einem Kranz um die Zylinderachse UV-Strahler in in Längsrichtung des zylindrischen Gehäuses verlaufenden Hüllrohren angeordnet sind, wobei der auf einer Stirnseite des Gehäuses vorgesehene Einlass eine Leiteinrichtung mit einem der in das Gehäuse einströmenden Flüssigkeit einen Drall erteilenden Leitschaufelkranz aufweist.

Zur Flüssigkeitsdesinfektion mithilfe einer UV-Strahlung wird die zu behandelnde Flüssigkeit, beispielsweise Wasser, durch ein eine Bestrahlungskammer bildendes, zylindrisches Gehäuse geführt, das mit gegenüber der zu behandelnden Flüssigkeit geschützt in zueinander parallel angeordneten Hüllrohren aus Quarzglas untergebrachten UV-Strahlern ausgerüstet ist. Da die Strahlungsintensität umgekehrt proportional dem Abstand zu den UV-Strahlern ist und eine gleichmäßige Desinfektion der behandelten Flüssigkeit eine insgesamt gleiche Bestrahlungsdosis für jede Volumseinheit der Flüssigkeit bedingt, sollte die Flüssigkeit durch die Bestrahlungskammer so strömen, dass die Strömungslinien in Bezug auf die UV-Strahler einen solchen Abstandsverlauf aufweisen, dass jede Volumseinheit der Flüssigkeit zwar entlang ihrer Strömungslinie unterschiedlichen Strahlungsintensitäten ausgesetzt wird, die von den Volumseinheiten entlang ihrer Strömungslinien bis zum Auslass aufgenommenen summierten Strahlungsdosen jedoch weitgehend gleich sind.

Da mit einer überwiegend axialen Durchströmung der Bestrahlungskammer dieses Ziel nicht erreicht werden kann, wurde versucht, der axialen Strömung einen Drall zu erteilen, sodass sich aufgrund der schraubenlinienförmigen Strömungslinien ein Ausgleich in Bezug auf die Summendosis der Bestrahlung entlang der einzelnen Strömungslinien einstellt. Die zur Ausbildung eines gewünschten Strömungsverlaufs eingesetzten Leiteinrichtungen können unterschiedlich ausgeführt sein und Leitwände innerhalb der Strömungskammer umfassen. Einfache Konstruktionsbedingungen werden allerdings durch Leiteinrichtungen im Einlassbereich der Strömungskammer erhalten. Zu diesem Zweck ist es bekannt (WO 2019/206387 A1), zwischen dem Zulauf und dem die Bestrahlungskammer bildenden, zylindrischen Gehäuse einen Übergangskonus als stirnseitigen Einlass vorzusehen, der einen Leitschaufelkranz zur Drallerteilung zwischen einer zentralen Buchse mit Strömungsprofil und dem Übergangskonus aufnimmt. Diesem Leitschaufelkranz ist eine Leiteinrichtung zur axialen Strömungsausrichtung im Zulauf vorgelagert, um eine möglichst ungestörte axiale Anströmung des Leitschaufelkranzes und damit eine gleichförmige schraubenlinienförmige Durchströmung des zylindrischen Gehäuses mit den in einem Kranz um die Zylinderachse angeordneten UV-Strahlern sicherzustellen. Es hat sich jedoch gezeigt, dass trotz dieser Maßnahmen keine ausreichend gleichmäßige Desinfektion über das gesamte Volumen der behandelten Flüssigkeit ohne eine überhöhte Strahlungsleistung der UV-Strahler erreicht werden kann.

Der Erfindung liegt somit die Aufgabe zugrunde, eine Vorrichtung zur Flüssigkeitsdesinfektion mit einer Leiteinrichtung für die Flüssigkeitsströmung durch die Bestrahlungskammer so auszustatten, dass eine weitgehend gleichmäßige Bestrahlungsdosis über das gesamte Volumen der die Bestrahlungskammer durchströmenden Flüssigkeit sichergestellt werden kann.

Ausgehend von einer Vorrichtung der eingangs geschilderten Art löst die Erfindung die gestellte Aufgabe dadurch, dass die Leiteinrichtung wenigstens zwei koaxiale Rohre, nämlich ein inneres Leitrohr für eine axiale Flüssigkeitsströmung und ein äußeres Mantelrohr mit dem Leitschaufelkranz umfasst.

Der Erfindung liegt die Erkenntnis zugrunde, dass die Summe der Strahlungsintensitäten der einzelnen UV-Strahler in jedem Punkt des vom Kranz der UV-Strahler umschlossenen Bereichs aufgrund der Verhältnisse der Punktabstände zu den UV-Strahlern in einem tolerierbaren Bereich angenähert gleich ist, sodass mit einer axialen Durchströmung dieses vom Kranz der UV-Strahler umschlossenen Strömungswegs eine bezüglich des Toleranzbereichs gleichmäßige Desinfektion über das Gesamtvolumen dieses Strömungsanteils erreicht wird. Die Bestrahlungsbedingungen außerhalb des Kranzes an UV-Strahlern unterscheiden sich jedoch erheblich von denen innerhalb des Kranzes der UV-Strahler, weil Punkte im Strömungsbereich außerhalb des Kranzes der UV-Strahler im Wesentlichen nur von einem UV-Strahler oder zwei benachbarten UV-Strahlern beaufschlagt werden, sodass in diesen Strömungsbereichen eine Umlaufkomponente der Strömung zu einem Abgleich der Bestrahlungsdosen entlang der Strömungslinien führt. Mit dem Leitschaufelkranz im Mantelrohr wird dem Strömungsanteil im Außenbereich des Kranzes der UV-Strahler ein entsprechender Drall erteilt, der dafür sorgt, dass auch der Strömungsanteil im Außenbereich des Kranzes der UV-Strahler mit einer über den Strömungsweg bis zum Auslass aufsummierten Bestrahlungsdosis weitgehend ausgeglichen behandelt wird.

Um die axiale Strömung durch das innere Leitrohr vorteilhaft an die durch die Anordnung der UV-Strahler vorgegebenen geometrischen Verhältnisse anzupassen, kann der Durchmesser des inneren Leitrohres dem Durchmesser des inneren Hüllzylinders der Hüllrohre entsprechen. Entspricht der Durchmesser des Mantelrohrs dem Durchmesser des äußeren Hüllzylinders der Hüllrohre, so wird der Flüssigkeitsströmung der notwendige Drall im Bereich des Kranzes der UV-Strahler und im Kranzaußenbereich in vorteilhafter Weise erteilt.

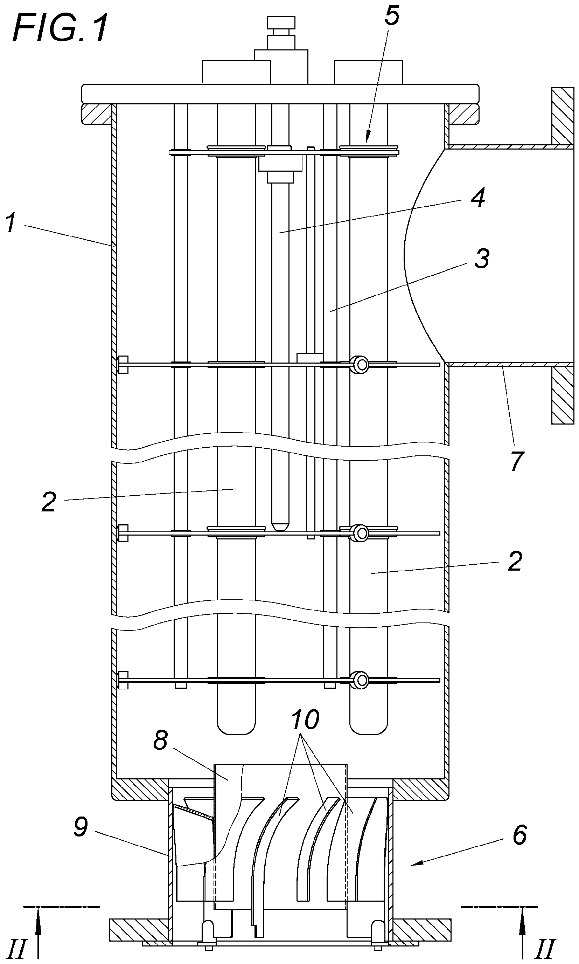

In der Zeichnung ist der Erfindungsgegenstand beispielsweise dargestellt. Es zeigen
- Fig. 1: eine erfindungsgemäße Vorrichtung zur Flüssigkeitsdesinfektion in einem vereinfachten Axialschnitt und
- Fig. 2: Diese Vorrichtung in einem Schnitt nach der Linie II-II der Fig. 1.

Eine erfindungsgemäße Vorrichtung zur Flüssigkeitsdesinfektion mithilfe einer UV-Bestrahlung weist in herkömmlicher Weise ein von der zu behandelnden Flüssigkeit, beispielsweise Wasser, durchströmtes, zylindrisches Gehäuse 1 auf, das eine Bestrahlungskammer mit über den Querschnitt verteilten, achsparallelen Hüllrohren 2 aus Quarzglas bildet, in denen UV-Strahler geschützt gegenüber der zu behandelnden Flüssigkeit angeordnet sind. Die Hüllrohre 2 bilden zwar gemäß dem Ausführungsbeispiel einen im Querschnitt kreisförmigen Kranz an Hüllohren 2, doch ist dies keinesfalls zwingend. Die einen Kranz bildenden Hüllrohr 2 können beispielsweise auch mit zumindest gruppenweise unterschiedlichem Abstand zur Längsachse des zylindrischen Gehäuses 1 oder mit einem Neigungswinkel gegenüber der Gehäuselängsachse in Gehäuselängsrichtung verlaufen.

Zur Reinigung dieser in einem Kranz um die Zylinderachse des Gehäuses zusammengefassten Hüllrohre 2 ist eine Reinigungseinrichtung vorgesehen, die einen auf achsparallelen Führungsrohren 3 verschiebbar geführten und an einen Stelltrieb 4 angeschlossen Schlitten 5 umfasst.

Die zu behandelnde Flüssigkeit strömt durch einen mit einem Zulauf verbundenen Einlass 6 stirnseitig in das Gehäuse 1 und verlässt das Gehäuse 1 im Bereich des gegenüberliegenden Gehäuseendes durch einen am Gehäusemantel angesetzten Auslass 7. Um der zu behandelnden Flüssigkeit bestimmte Strömungsverläufe durch das zylindrische Gehäuse 1 vorgeben zu können, ist der Einlass 6 mit einer zur Zylinderachse koaxialen Leiteinrichtung versehen, die ein inneres Leitrohr 8, ein äußeres Mantelrohr 9 sowie einen Leitschaufelkranz 10 zwischen dem inneren Leitrohr 8 und dem äußeren Mantelrohr 9 umfasst. Die über einen an das äußere Mantelrohr 9 angeflanschten Zulauf in den Einlass 6 einströmende Flüssigkeit wird somit in zwei Strömungsanteile aufgeteilt, die einerseits durch das innere Leitrohr 8 und anderseits zwischen dem inneren Leitrohr 8 und dem äußeren Mantelrohr 9 durch den Leitschaufelkranz 10 in das Gehäuse 1 geführt werden. Während der zentrale Strömungsanteil durch das innere Leitrohr 8 in Richtung der Zylinderachse ausgerichtet wird, wird dem äußeren, den zentralen Strömungsanteil umschließenden Strömungsanteil durch den Leitschaufelkranz 10 ein Drall erteilt, sodass dieser äußere Strömungsanteil einen schraubenförmig gewundenen Verlauf durch das zylindrische Gehäuse 1 nimmt.

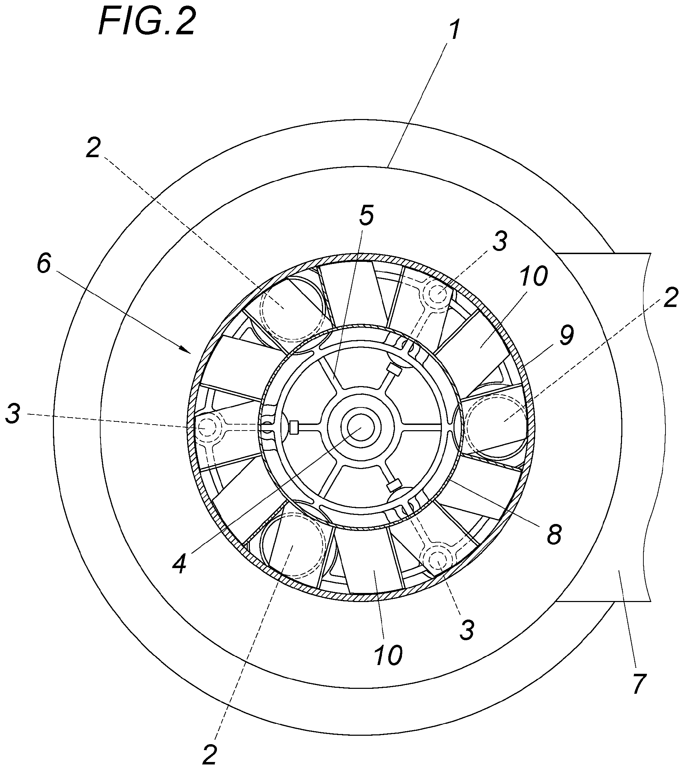

Durch diese unterschiedliche Strömungsführung einerseits im Innenbereich und anderseits im Außenbereich des von den Hüllrohren 2 gebildeten Kranzes kann in überraschender Weise eine über das gesamte Volumen der das Gehäuse 1 durchströmenden Flüssigkeit eine weitgehend gleichmäßige Bestrahlungsdosis erreicht werden, insbesondere wenn der Durchmesser des inneren Leitrohres 8 dem Durchmesser des inneren Hüllzylinders des Kranzes der Hüllrohre 2 und der Durchmesser des Mantelrohrs 9 dem Durchmesser des äußeren Hüllzylinders des Hüllrohrkranzes angeglichen werden, wie dies aus der Fig. 2 ersichtlich wird.

Es braucht wohl nicht besonders hervorgehoben zu werden, dass die Erfindung nicht auf das dargestellte Ausführungsbeispiel beschränkt ist. So ist es keinesfalls zwingend, dass die durch den Einlass 6 gebildete Leiteinrichtung koaxial gegenüber dem zylindrischen Gehäuse 1 ausgerichtet sein muss. Eine exzentrische Leiteinrichtung kann Z. B. in Verbindung mit einem exzentrischen Kranz der Hüllrohre vorteilhafte Strömungsbedingungen schaffen, um eine über das Gesamtvolumen der behandelten Flüssigkeit ausgeglichene Verteilung der entlang des Strömungswegs durch die Bestrahlungskammer aufgenommenen Bestrahlungsdosen sicherzustellen. Außerdem können sowohl innerhalb des inneren Leitrohrs 8 als auch innerhalb des Mantelrohrs 9 zusätzliche Strömungsrohre angeordnet werden, damit insbesondere bei Gehäusen 1 mit einem größeren Durchmesser entsprechender Einfluss auf die Strömungsverteilung über den Gehäusequerschnitt genommen werden kann. Der Leitschaufelkranz 10 kann in diesem Fall auf mehrere Strömungsrohre aufgeteilt werden, wobei auch unterschiedliche Leitschaufelteilkränze zum Einsatz kommen können.

## Patentansprüche

1. Vorrichtung zur Flüssigkeitsdesinfektion mit einem an den Enden einen Einlass (6) und einen Auslass (7) für die zu behandelnde Flüssigkeit aufweisenden, zylindrischen Gehäuse (1), in dem in einem Kranz um die Zylinderachse UV-Strahler in in Längsrichtung des zylindrischen Gehäuses (1) verlaufenden Hüllrohren (2) angeordnet sind, wobei der auf einer Stirnseite des Gehäuses (1) vorgesehene Einlass (6) eine Leiteinrichtung mit einem der in das Gehäuse (1) einströmenden Flüssigkeit einen Drall erteilenden Leitschaufelkranz (10) aufweist, **dadurch gekennzeichnet, dass** die Leiteinrichtung wenigstens zwei koaxiale Rohre, nämlich ein inneres Leitrohr (8) für eine axiale Flüssigkeitsströmung und ein äußeres Mantelrohr (9) mit dem Leitschaufelkranz (10) umfasst.

2. Vorrichtung nach Anspruch 1, **dadurch gekennzeichnet, dass** der Durchmesser des inneren Leitrohres (8) dem Durchmesser des inneren Hüllzylinders des Kranzes der Hüllrohre (2) entspricht.

3. Vorrichtung nach Anspruch 1 oder 2, **dadurch gekennzeichnet, dass** der Durchmesser des Mantelrohrs (9) dem Durchmesser des äußeren Hüllzylinders des Kranzes der Hüllrohre (2) entspricht.
